# EUROPÄISCHE PATENTANMELDUNG

(11) **EP 1 589 252 A1**
(43) Veröffentlichungstag der Anmeldung: **26.10.2005**
(21) Anmeldenummer: 05007730.4
(22) Anmeldetag: 08.04.2005
(51) Int. Cl.: F16F 9/04

(54) **Deckel für eine Luftfeder**

(30) Priorität: 22.04.2004 DE 102004020207; 01.07.2004 DE 102004031875
(71) Anmelder: ZF FRIEDRICHSHAFEN AG, 88046 Friedrichshafen (DE)
(72) Erfinder: Gross, Alexander, 97653 Bischofsheim (DE); Nowotka, Thomas, 95700 Ebelsbach (DE); Gubitz, Holger, 97422 Schweinfurt (DE)

(57) **Zusammenfassung**

Deckel für eine Luftfeder, umfassend einen Außendeckel (5) und einen Innendeckel (19), wobei ein Rollbalg der Luftfeder zwischen Klemmflächen (13,27) des Außerdeckels (5) und des Innendeckels (9) verspannt ist, wobei mindestens eines der Deckelteile gegen das andere Deckelteil radial elastisch ausgeführt ist und im endmontierten Zustand eine Vorspannkraft auf den Rollbalg ausübt.

## Beschreibung

Die Erfindung betrifft einen Deckel für eine Luftfeder entsprechend dem Oberbegriff von Patentanspruch 1.

Die DE 40 04 451 A1 zeigt einen Rollbalg für eine Luftfeder. Die Luftfeder verfügt über einen zweiteiligen Deckel. Ein Innendeckel weist eine konische Mantelfläche auf, auf der der Rollbalg anliegt. Im Innendeckel sind mehrere Sacklochgewinde eingearbeitet. Ein Außendeckel liegt im Endmontagezustand mit seiner ebenfalls konische Innenmantelfläche auf der Außenseite des Rollbalgendes auf. Durch Schrauben, die den Außendeckel durchgreifen und in die Sacklochgewinde einschraubbar sind, wird das Rollbalgende kraftschlüssig gehalten. Zusätzlich ist liegt eine Formschlussverbindung zwischen einer Nut im Rollbalg und einem ringförmigen Vorsprung des Außendeckels vor. Diese Deckelkonstruktion erscheint einerseits teuer und andererseits durch die notwendige Wandstärke für die Sacklochgewinde sehr groß bemessen, so dass ein Verlust an u. U. nutzbarem Federraum innerhalb der Luftfeder auftritt.

Aufgabe der vorliegenden Erfindung ist es, einen Deckel für eine Luftfeder derart weiter zu entwickeln, dass einerseits ein einfacher Deckel vorliegt und anderseits ein maximal großer Federraum für die Luftfeder vorliegt.

Erfindungsgemäß wird die Aufgabe dadurch gelöst, dass mindestens eines der Deckelteile gegen das andere Deckelteil radial elastisch ausgeführt ist und im endmontierten Zustand eine Vorspannkraft auf den Rollbalg ausübt.

In weiterer vorteilhafter Ausgestaltung wird eine Rückseite der Klemmfläche des Innendeckels vom Druck innerhalb der Luftfeder beaufschlagt. Neben der Eigenspannung und der daraus resultierenden Haltekraft für den Rollbalg kann zusätzlich der Druck innerhalb der Luftfeder für eine zusätzliche Haltekraft genutzt werden.

Gemäß einem vorteilhaften Unteranspruch besteht der Innendeckel aus einem Kunststoff. Ein Deckel aus einem Kunststoff erspart Masse und ermöglicht auch kompliziertere Formgebungen in Verbindung mit einem günstigen Herstellungspreis.

Die Klemmfläche des Innendeckels sind auf einem segmentierten umlaufenden Klemmring angeordnet. Bei größerer Wandstärke des Klemmrings kann eine größere Radialbeweglichkeit erreicht werden.

Zur weiteren Steigerung der Haltekräfte für den Rollbalg ist die Klemmfläche mit einem Zugsicherungsprofil für den Rollbalg versehen.

Des weiteren ist vorgesehen, dass ein Spalt zwischen den Segmenten des Klemmrings mit einem weichelastischen Füllstoff gefüllt ist. Dieses Merkmal sichert die Funktion der selbstverstärkenden Anpresskraft durch den Innendrucks und lässt die Segmente radial beweglich bleiben.

Zur Fixierung werden der Außendeckel und der Innendeckel über eine Stiftverbindung gehalten. Dabei besteht die Möglichkeit, dass die Stiftverbindung von mindestens einem radial elastischen Schnappelement gesichert wird. Alternativ können der Innendeckel und der Außendeckel miteinander verschweißt sein.

Des weiteren ist zwischen dem Innendeckel und dem Außendeckel eine Ringdichtung vorgesehen, die einen Druckverlust über die Stiftverbindung verhindert. Darüber hinaus verhindert dieses Runddichtprinzip, dass eine Balgstirnfläche mit dem Betriebsdruck der Luftfede beaufschlagt wird, wodurch eine Delamination des Balges auftreten könnte.. Aus Kostengründen sind die Ringdichtung und der Füllstoff zwischen den Segmenten einteilig ausgeführt.

Anhand der folgenden Figurenbeschreibung soll die Erfindung näher erläutert werden.

Es zeigt:
- Fig. 1: Schnittdarstellung durch einen Deckel für eine Luftfeder
- Fig. 2: Explosionsdarstellung zur Fig. 1

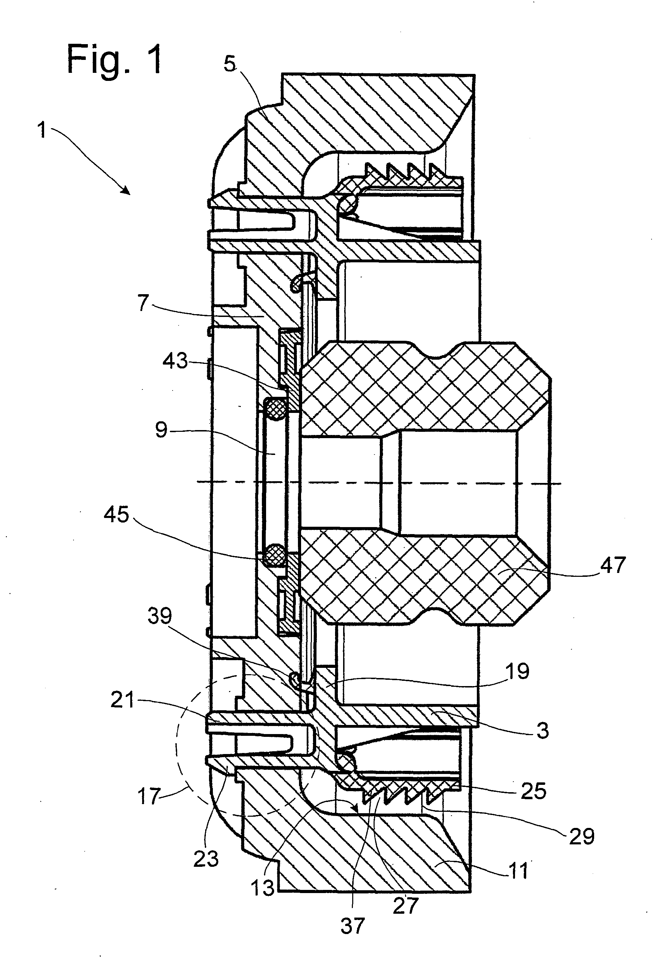

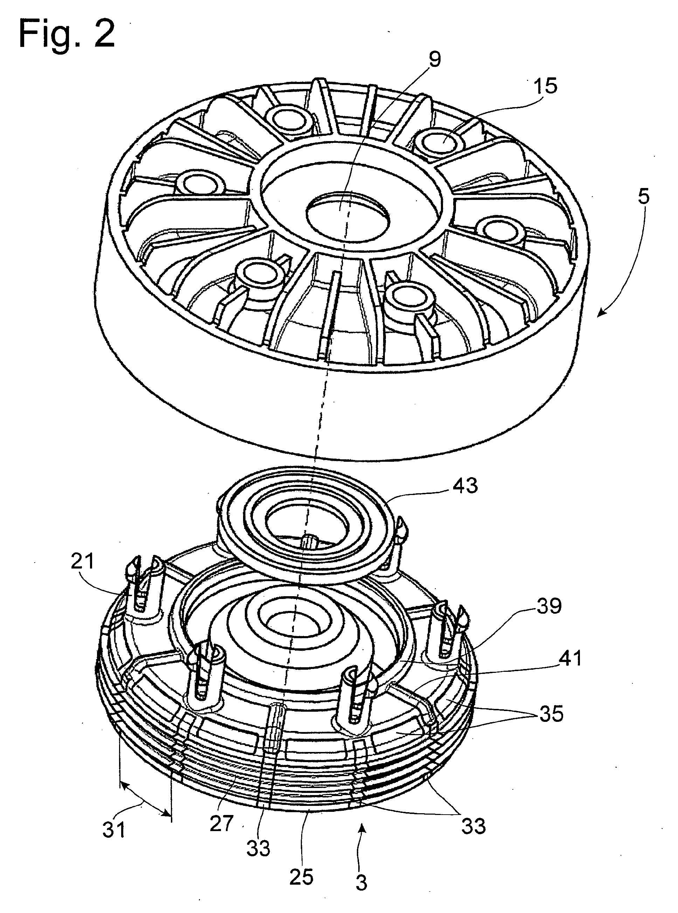

Die Fig. 1 zeigt einen Deckel 1 für eine Luftfeder, wie sie z. B. in einem Kraftfahrzeug eingesetzt wird, deren Aufbau als allgemein bekannt vorausgesetzt wird. Der Deckel 1 besteht u. a. aus einem Innendeckel 3 und einem Außendeckel 5. Der Außendeckel 5 verfügt über einen topfförmigen Querschnitt mit einem kreisringförmigen Boden 7, der ggf. eine Durchgangsöffnung 9 für eine nicht dargestellte Kolbenstange eines Schwingungsdämpfers aufweist. Dem Boden schließt sich in Axialrichtung ein umlaufender Klemmrand 11 mit einer nach radial innen ausgerichteten Klemmfläche 13. Der Klemmrand 11 ist möglichst formstabil ausgelegt. Des weiteren verfügt der Boden 7 über eine Anzahl von Öffnungen 15 (s. Fig. 2) für Stiftverbindungen 17 mit dem Innendeckel 3. Am Innendeckel erstrecken sich von einem Boden 19 mehrere Stifte 21, die die Öffnungen 15 im Außendeckel 5 durchgreifen, so dass der Außendeckel und der Innendeckel über die Stiftverbindungen zusammengehalten werden. Zusätzlich kann die Stiftverbindung von mindestens einem radial elastischen Schnappelement 23 gesichert werden, das auf der Oberseite des Bodens 7 des Außendeckels angreift. Alternativ kann man über die Stiftverbindung den Außendeckel und den Innendeckel auch miteinander verschweißen, wobei man dann u. U. an den Stiften 21 eine Art Kopf auf dem Boden 7 aufsitzen lässt.

Der Innendeckel, der bevorzugt aus einem Kunststoff besteht, verfügt über einen Klemmring 25 mit einer nach radial außen gerichteten Klemmfläche 27. Der Innendeckel ist im Bereich der Klemmfläche 27 radial elastisch ausgeführt und übt im endmontierten Zustand eine Vorspannkraft auf einen in einem Ringraum 29 endenden ebenfalls nicht dargestellten Rollbalg der Luftfeder aus. Die Klemmfläche 27 des Innendeckels 3 ist, wie die Fig. 2, zeigt, segmentartig in Umfangsrichtung aufgeteilt. Vorhandene Spalte 33 zwischen den Segmenten 31 sind mit einem weichelastischen Füllstoff gefüllt. Zusätzliche Taschen 35 auf der Rückseite der Klemmfläche 27 sorgen für eine radiale Elastizität. Des weiteren ist die Klemmfläche 27 mit einem Zugsicherungsprofil 37 für den Rollbalg versehen.

Des weiteren ist, wie aus der Fig. 1 erkennbar ist, zwischen dem Boden 19 des Innendeckels 19 und dem Boden 7 des Außendeckels eine Ringdichtung 39 angeordnet, die einen Druckverlust über die Stiftverbindung 17 verhindert. Die Fig. 2 verdeutlicht, dass die Ringdichtung 39 und der Füllstoff zwischen den Spalten 33 über radial verlaufenden Spritzraupen 41 einteilig ausgeführt sind, so dass der Füllstoff und die Ringdichtung in einem gemeinsamen Vorgang am Innendeckel angespritzt werden kann.

Sofern die Luftfeder mit einem Schwingungsdämpfer kombiniert wird, ist zwischen dem Boden 7 und einer Deckscheibe 43 eine Ringdichtung 45 gekammert. Die Deckscheibe kann aus einem metallischen Werkstoff oder Kunststoff bestehen und ist mit dem Außendeckel in beliebiger Form axial gegen Herausfallen gesichert. Der Deckscheibe kann sich wiederum ein Anschlagpuffer 47 anschließen, der ab einem definierten Einfederungszustand der Luftfeder wirksam wird.

Bei der Montage wird der Innendeckel in den Rollbalg der Luftfeder geschoben, bis die Oberseite des Bodens 19 in etwa mit dem Ende des Rollbalgs abschließt. Sofern die Luftfeder mit einem Schwingungsdämpfer kombiniert werden soll und dem entsprechend eine Durchgangsöffnung 9 vorliegt, wird der Außendeckel 5 mit der Ringdichtung 45 bestückt und durch die Deckscheibe 43 gesichert. Diese beschriebene Baueinheit wird über den Innendeckel gestülpt, wobei die Stifte 21 in die Öffnungen 15 geschoben werden, bis die Unterseite des Bodens 7 vom Außendeckel und die Oberseite des Bodens 19 vom Innendeckel mit ausreichender Vorspannung für die Ringdichtung 39 in Kontakt stehen. In dieser Position sichern die Schnappelemente oder es wird die Verschweißung zwischen dem Außendeckel und dem Innendeckel vorgenommen. Der Rollbalg ist nun in dem Ringraum 29 zwischen den Klemmflächen 13; 27 fixiert.

Wenn der Rollbalg mit Druckluft gefüllt wird, dann wirkt der Druck auch auf die Rückseite des Klemmrings 25 und unterstützt die Vorspannung des elastischen Klemmrands. Der Füllstoff in den Spalten 33 verhindert, dass Druckluft zwischen den Segmenten 31 und dem Rollbalg über den Ringraum 29 und die Stiftverbindungen 17 entweichen kann, so dass sich der selbstverstärkende Anpressdruckt einstellt.

## Patentansprüche

1. Deckel für eine Luftfeder, umfassend einen Außendeckel und einen Innendeckel, wobei ein Rollbalg der Luftfeder zwischen Klemmflächen des Außendeckels und des Innendeckels verspannt ist,
**dadurch gekennzeichnet,**
**dass** mindestens eines der Deckelteile (3; 5) gegen das andere Deckelteil (3; 5) radial elastisch ausgeführt ist und im endmontierten Zustand eine Vorspannkraft auf den Rollbalg ausübt.

2. Deckel nach Anspruch 1,
**dadurch gekennzeichnet,**
**dass** eine Rückseite der Klemmfläche (27) des Innendeckels (3) vom Druck innerhalb der Luftfeder beaufschlagt wird.

3. Deckel nach Anspruch 1,
**dadurch gekennzeichnet,**
**dass** der Innendeckel (3) aus einem Kunststoff besteht.

4. Deckel nach Anspruch 1,
**dadurch gekennzeichnet,**
**dass** die Klemmfläche (27) des Innendeckels (3) auf einem segmentierten umlaufenden Klemmring (25) angeordnet sind.

5. Deckel nach Anspruch 1,
**dadurch gekennzeichnet,**
**dass** die Klemmfläche (27) mit einem Zugsicherungsprofil (37) für den Rollbalg versehen ist.

6. Deckel nach Anspruch 3;
**dadurch gekennzeichnet,**
**dass** ein Spalt (33) zwischen den Segmenten (31) des Klemmrings (25) mit einem weichelastischen Füllstoff gefüllt ist.

7. Deckel nach Anspruch 1,
**dadurch gekennzeichnet,**
**dass** der Außendeckel (5) und der Innendeckel (3) über eine Stiftverbindung (17) gehalten werden.

8. Deckel nach Anspruch 7,
**dadurch gekennzeichnet,**
**dass** die Stiftverbindung (17) von mindestens einem radial elastischen Schnappelement (23) gesichert wird.

9. Deckel nach Anspruch 1,
**dadurch gekennzeichnet,**
**dass** zwischen dem Innendeckel (3) und dem Außendeckel (5) eine Ringdichtung (31) vorliegt, die gegen einen Druckverlust über die Stiftverbindung (17) wirksam ist.

10. Deckel nach den Ansprüchen 6 und 9,
**dadurch gekennzeichnet,**
**dass** die Ringdichtung (39) und der Füllstoff zwischen den Segmenten (31) einteilig ausgeführt sind.

11. Deckel nach Anspruch 1,
**dadurch gekennzeichnet,**
**dass** der Außendeckel (5) und der Innendeckel (3) miteinander verschweißt sind.
